# FASCICULE DE BREVET EUROPEEN

(11) **EP 2 496 449 B1**
(45) Date de publication et mention de la délivrance du brevet: **08.11.2017**
(21) Numéro de dépôt: 10771451.1
(22) Date de dépôt: 28.10.2010
(51) Int. Cl.: B60R 25/02

(54) **DISPOSITIF ANTIVOL POUR COLONNE DE DIRECTION DE VEHICULE A SUPER CONDAMNATION ASSUREE PAR BASCULE**
LENKRADSCHLOSS FÜR EINE FAHRZEUGLENKSÄULE MIT EINE WEGFAHRSPERRE MITTELS EIN KIPPHEBEL
ANTITHEFT DEVICE FOR A STEERING COLUMN OF A VEHICLE HAVING AN IMMOBILISER USING A ROCKER

(30) Priorité: 05.11.2009 FR 0905311
(43) Date de publication de la demande: 12.09.2012
(73) Titulaire: U-Shin France, 94000 Créteil (FR)
(72) Inventeur: VILLAGRASA, Victor, F-94046 Creteil (FR); FROT, Donatien, F-94046 Creteil (FR); PERRIN, Christophe, F-94046 Creteil (FR); LESUEUR, Guillaume, F-94046 Creteil (FR)
(74) Mandataire: Gaillarde, Frédéric F. Ch.
(86) Numéro de dépôt international: PCT/EP2010/066410
(87) Numéro de publication internationale: WO 2011/054742

(56) Documents cités:
- EP-A1- 0 669 234
- EP-A1- 0 989 038
- WO-A1-02/08721
- FR-A1- 2 909 951
- GB-A- 2 063 985

## Description

L'invention concerne les dispositifs antivol pour colonne de direction de véhicule.

Ces dispositifs qui comprennent généralement le verrou de la clé de contact du véhicule, ont pour fonction de bloquer le mouvement de la colonne lorsque ce mouvement n'est pas autorisé, notamment lorsque la clé de contact du véhicule est absente.

En outre, ils sont fréquemment dotés d'une fonction dite de super condamnation qui vise à maintenir le blocage de la colonne même si un malfaiteur a rompu la partie du dispositif portant le verrou. Die tels dispositifs sont divulgués dans GB 2 063 985, EP 0 669 234 et FR 2 909 951. Par ailleurs, ces dispositifs doivent être conformes aux normes et aux réglementations en vigueur concernant le choc du genou du conducteur, qui prévoient que le dispositif antivol se casse sous l'effet d'un choc prédéterminé avec le genou du conducteur et ce sans blesser sérieusement ce dernier. C'est la raison pour laquelle le dispositif est généralement pourvu d'une zone fusible qui lui permet de se rompre sous l'effet d'un effort réduit. Dans ces conditions, on cherche à faire en sorte que, si un malfaiteur exerce un effort similaire, la rupture a lieu sans menacer la fonction de super condamnation. Toutefois, le malfaiteur peut envisager d'exercer le même effort mais suivant une direction différente de celle correspondant à l'impact du genou. Or, dans ce cas, il y a de forts risques que la super condamnation ne fonctionne pas.

En effet, cette fonction est déclenchée par une tige mobile sollicitée par un ressort contre la partie du dispositif portant le verrou. Si l'effort exercé sur le dispositif pour le rompre est appliqué du même côté du dispositif que celui où se trouve la tige, la rupture qui s'ensuit libère un grand espace pour le débattement de la tige de sorte que la super condamnation se produit. Mais si l'effort est exercé du côté opposé à celui où se trouve la tige, il est possible que la rupture ait lieu sans toutefois dégager un espace suffisant pour permettre un mouvement de la tige déclenchant la fonction de super condamnation.

Un but de l'invention est de faciliter le déclenchement de la fonction de super condamnation quel que soient le point où s'applique l'effort de rupture et sa direction d'application.

A cet effet, on prévoit, selon l'invention, un dispositif antivol pour colonne de direction de véhicule selon la revendication 1 et un véhicule selon la revendication 10. Le dispositif antivol comporte:
- une partie de blocage comprenant un pêne de blocage de colonne de direction, et un organe mobile apte à commander un blocage en position du pêne ; et
- une partie d'accès comprenant un verrou et portant une bascule pivotante en appui d'une part contre l'organe mobile et d'autre part contre la partie de blocage.

Ainsi, si l'effort s'exerce du côté de l'organe mobile, l'espace libéré permet comme précédemment le débattement de cet organe et le déclenchement de la fonction de super condamnation. Si l'effort s'exerce du côté opposé, la bascule offre une plus grande course de débattement à l'organe mobile pour favoriser ce déclenchement.

Le dispositif pourra présenter en outre au moins l'une quelconque des caractéristiques suivantes :
- la bascule est en appui contre l'organe mobile et la partie de blocage suivant une même direction ;
- la bascule est en appui contre l'organe mobile et la partie de blocage respectivement de part et d'autre du pivot ;
- l'organe mobile est monté coulissant ;
- la partie de blocage présente une cavité adjacente à une zone d'appui de la bascule sur la partie de blocage et s'étendant en regard de la bascule ;
- la partie de blocage présente une cavité adjacente à une zone d'appui de la bascule sur la partie de blocage et s'étendant d'un côté de la zone d'appui opposé à la bascule ;
- la partie de blocage présente une cavité entourant une zone d'appui de la bascule sur la partie de blocage et s'étendant en regard de la bascule ;
- la bascule comprend un bras en appui contre l'organe mobile et un bras en appui contre la partie de blocage, moins long que l'autre bras ; et
- l'organe mobile présente une extrémité à face sphérique en contact avec la bascule.

Les différentes cavités prévues ci-dessus permettent selon les circonstances de la rupture d'augmenter le débattement angulaire de la bascule et donc celui de l'organe mobile pour favoriser encore le déclenchement de la fonction de super condamnation.

D'autres caractéristiques et avantages de l'invention apparaîtront encore dans la description suivante d'un mode de réalisation et d'une variante donnés à titre d'exemples non limitatifs en référence aux dessins annexés sur lesquels :
- la figure 1 est une vue schématique du dispositif selon un mode de réalisation de l'invention, illustrant son principe de fonctionnement ;
- la figure 2 est une vue partielle en coupe longitudinale du dispositif de la figure 1 ;
- la figure 3 est une vue en coupe longitudinale d'une autre partie du même dispositif ;
- la figure 4 est une vue en perspective de certaines pièces du dispositif ; et
- la figure 5 est une vue analogue à la figure 1 illustrant une variante de réalisation.

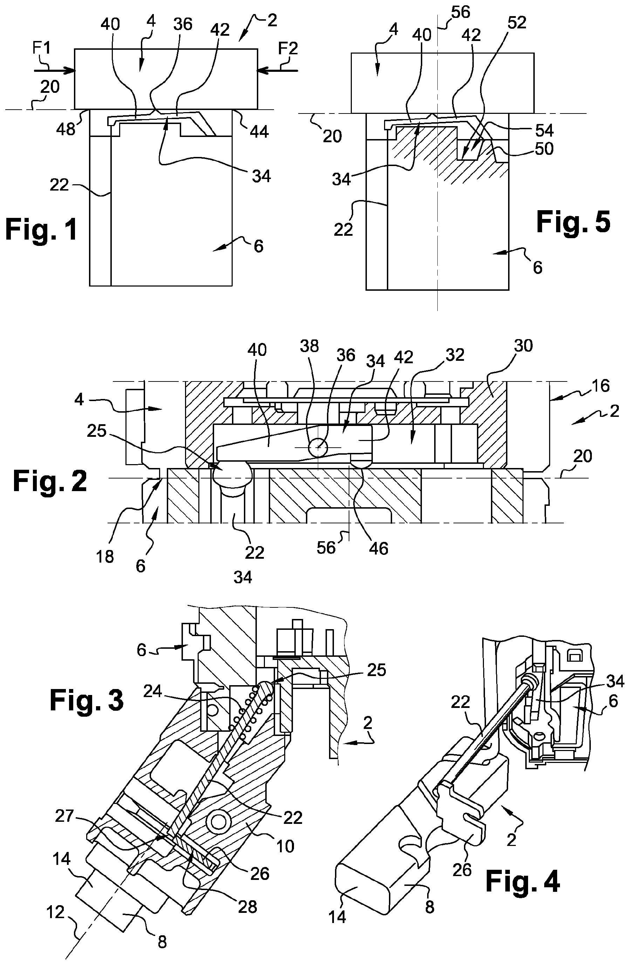

On a illustré aux figures 1 à 4 un mode de réalisation du dispositif antivol selon l'invention pour colonne de direction de véhicule automobile. Ce dispositif 2 comprend, en l'espèce, deux parties principales que nous appellerons ici respectivement partie d'accès 4 et partie de blocage 6. La partie d'accès 4 comprend notamment un verrou à clé ou dispositif analogue. Lorsque le conducteur du véhicule introduit la clé dans le verrou, il peut faire tourner un rotor de cette dernière pour mettre le véhicule sous tension et en fonctionnement.

La partie de blocage 6 comprend notamment un pêne 8 visible sur la figure 4 ayant une forme générale de parallélépipède rectangle. Il est monté mobile à coulissement dans un guide-pêne 10 de la partie 6. Le coulissement s'effectue suivant une direction longitudinale 12 du pêne. Lorsqu'il se trouve en position étendue, le pêne, au moyen de son extrémité distale 14, vient en prise avec un organe de la colonne de direction du véhicule pour bloquer la rotation de cette dernière autour de son axe de rotation.

L'actionnement du verrou au moyen de la clé permet de commander la position du pêne et donc le blocage ou le déblocage de la colonne de direction. On se référera notamment pour plus de détails à ce sujet à la demande WO 2008/074726 au nom de la demanderesse.

Le dispositif 2 comprend un boîtier 16 présentant, à une jonction entre les parties d'accès 4 et de blocage 6, une zone d'affaiblissement ou de rupture 18 matérialisée par un amincissement local de l'épaisseur de la paroi du boîtier 16. Cette zone est positionnée de sorte que, si un effort est exercé sur la partie d'accès 4, il est susceptible d'engendrer la rupture du boîtier 16 et du dispositif par séparation de la partie d'accès 4 et de la partie de blocage 6 suivant un plan 20 illustré à la figure 2, passant par la zone d'affaiblissement et perpendiculaire à l'axe de symétrie principal 56 de la partie d'accès 4.

La partie de blocage 6 comprend un organe mobile 22, en l'espèce sous la forme d'un coulisseau tel qu'une pige 22 ou aiguille. La pige 22 a la forme générale d'une tige rigide rectiligne s'étendant en l'espèce parallèlement à la direction 12, laquelle est inclinée par rapport à l'axe 56. La pige 22 est montée mobile à coulissement dans le boîtier 16 comme on le voit sur la vue en coupe de la figure 3.

La partie de blocage 6 comprend un ressort 24 travaillant en compression et prenant appui par une extrémité contre un épaulement de l'extrémité proximale 25 de la pige 22 et par son autre extrémité contre le boîtier afin de solliciter la pige dans une direction tendant à la rapprocher de la partie d'accès 4 et à l'éloigner du pêne 8.

La partie de blocage comprend une plaquette 26 montée mobile dans un conduit 28 et maintenue en position à une extrémité de ce conduit par l'extrémité distale 27 de la pige 22. Le dispositif est agencé de sorte que, si la pige 22 sollicitée par le ressort se déplace en direction de la partie d'accès 4 et en direction opposée au pêne, elle libère la plaquette 26 qui bloque alors en position le pêne 8 lorsqu'il immobilise lui-même la colonne de direction.

La partie d'accès 4 comprend un stator 30 présentant un logement 32 à son extrémité inférieure, ouvert vers le bas. Ce logement 32 reçoit une bascule ou levier 34 montée mobile à pivotement par rapport au stator 30 autour d'un axe 36 matérialisé par un arbre 38. L'axe 36 est orthogonal à l'axe de symétrie principal 56 de la partie d'accès 4. La bascule 34 comprend deux bras opposés 40, 42 s'étendant de part et d'autre du pivot. L'extrémité du bras 40 est en appui contre une face de forme sphérique de l'extrémité proximale 25 de la pige 22. L'autre bras 42 est en appui contre le bâti de la partie de blocage 6. Ces deux appuis se font dans la même direction, à savoir ici suivant l'axe 56 et en direction de la partie de blocage. En l'espèce, le bras 40 est plus long que le bras 42 de sorte que la distance séparant le point d'appui du bras 40 et l'axe 36 est supérieure à celle séparant le point d'appui du bras 42 et ce même axe. L'axe 36 est par ailleurs décalé de sorte qu'il ne passe pas par l'axe 56, ce dernier s'étendant au droit du bras 42.

Le dispositif 2 fonctionne de la façon suivante. Nous supposons ici que la colonne de direction est bloquée par le pêne 8. En référence à la figure 1, un malfaiteur exerce un effort F1 sur la partie d'accès 4 suivant une direction essentiellement parallèle au plan 20. Cet effort est donc appliqué du côté du dispositif qui comprend la pige 22 et du côté le plus proche du bras 40. Sous l'effet de cet effort, la zone fusible 18 se casse sur sa plus grande partie suivant le plan 20, permettant ainsi la rotation de la partie d'accès 4 par rapport à la partie de blocage 6 autour d'un axe de rotation passant par un point 44 indiqué sur la figure 1 et situé au bord de la partie de blocage. La partie d'accès 4 pivote donc dans le sens des aiguilles d'une montre sur la figure 1. La bascule effectue une rotation dans le même sens autour du point d'appui 46 du bras 42 sur le bâti. Le bras 40 s'éloigne donc à grande distance et rapidement de la pige 22, offrant ainsi à cette dernière une possibilité de grand débattement. Sollicitée par le ressort 24, la pige se déplace donc en libérant la plaquette 26 qui immobilise à son tour le pêne 8 en position, produisant ainsi la super condamnation.

Supposons maintenant que l'effort exercé est un effort F2 ayant pour point d'application cette fois le côté de la partie d'accès opposé à la pige, le côté le plus proche du bras 42, l'effort s'exerçant parallèlement au plan 20 à nouveau. Cette fois, la rupture de la zone fusible 18 entraîne une rotation de la partie d'accès 4 dans le sens contraire des aiguilles d'une montre autour d'un axe de rotation passant par un point 48 illustré à la figure 1, au bord de la partie de blocage. L'axe 36 effectue aussi une rotation dans le même sens, ce qui permet à la bascule 34, toujours sollicitée par la pige 22, d'avoir un mouvement de rotation par rapport à la partie d'accès 4 dans le sens des aiguilles d'une montre. Ce dernier mouvement de la bascule, qui est la composée de deux mouvements de rotation s'il on prend comme référentiel la partie de blocage 6, libère à nouveau un grand espace dans la trajectoire de la pige 22 qui, sollicitée par le ressort, peut comme précédemment coulisser pour libérer la plaquette 26 et permettre le blocage en position du pêne 8. On observera que l'axe 36 se déplace ici encore à une vitesse relativement grande, ce qui facilite l'activation rapide du dispositif. Dans ce dernier cas, bien que l'effort soit exercé du côté opposé à celui portant la pige 22, cette dernière peut se déployer rapidement pour permettre la super condamnation.

On obtient donc un déplacement important de la pige d'activation quelle que soit la direction de l'effort exercé pour rompre le dispositif. L'invention ne nécessite pas de changer le positionnement de la pige par rapport à celui connu dans l'art antérieur.

On a illustré à la figure 5 une variante de réalisation du dispositif. La plupart des pièces sont inchangées par rapport au mode de réalisation qui vient d'être décrit. La seule différence réside dans le fait que le point d'appui de la partie de blocage pour le bras 42 a cette fois la forme d'un îlot ou d'un téton 50, s'étendant en saillie d'une face 52 du bâti de la partie de blocage. Cette dernière présente ici une cavité 54 entourant le relief 50 sur un tour complet et s'étendant notamment en regard du bras 34.

Avec cet agencement, le dispositif est rendu beaucoup plus sensible au déplacement de la partie d'accès 4 par rapport à la partie de blocage en cas de rupture. En effet, si l'effort F1 a pour effet de déplacer en translation vers la droite la partie d'accès 4 par rapport à la partie de blocage 6, le bras 34 tombe dans la cavité en étant poussé vers la droite avec la partie d'accès 4, ce qui a pour effet de faire pivoter la bascule en dépit du simple mouvement de coulissement que connait la partie d'accès 4. La pige pourra donc libérer la plaquette. A l'inverse, s'il s'agit d'une translation en direction opposée sous l'effet d'un effort F2, à nouveau le bras 42 tombe dans la cavité, cette fois du côté gauche du téton 50, permettant la rotation de la bascule dans le sens des aiguilles d'une montre et donc le déplacement de la pige. La rotation de la bascule aura également lieu si l'effort pour la rupture est exercé de façon à faire tourner la partie d'accès 4 par rapport à la partie de blocage 6 autour de l'axe principal 56. Suivant le sens de rotation, le bras 42 tombera d'un côté ou de l'autre du téton, en avant ou en retrait du plan de la figure 5, permettant encore une fois la rotation de la bascule et la libération de la pige. On voit donc que cette variante du dispositif lui donne une plus grande sensibilité à différents types de mouvement et à une combinaison de ces mouvements.

Bien entendu, on pourra apporter à l'invention de nombreuses modifications sans sortir du cadre de celle-ci.

On pourra prévoir une cavité d'un côté ou de l'autre du point d'appui du bras 42 sans qu'il s'agisse d'une cavité entourant un relief formant ce point d'appui.

## Revendications

1. Dispositif antivol (2) pour colonne de direction de véhicule, comportant :
- une partie de blocage (6) comprenant un pêne (8) de blocage de colonne de direction, et
- un organe mobile (22) apte à commander un blocage en position du pêne (8) ; et
- une partie d'accès (4) comprenant un verrou et
- un boîtier (16) comprenant la partie de blocage (6) et la partie d'accès (4) et présentant une zone fusible (18) apte à se rompre sous l'effet d'un effort réduit et disposée à une jonction entre les parties d'accès (4) et de blocage (6);
- ledit organe mobile (22) étant apte à commander le blocage en position du pêne (8) lors d'une séparation des parties d'accès et de blocage au niveau de la zone fusible, (18),
- la partie d'accès (4) comportant une bascule pivotante (34) en appui d'une part contre l'organe mobile (22) et d'autre part contre la partie de blocage (6).

2. Dispositif selon la revendication précédente dans lequel la bascule est en appui contre l'organe mobile (22) et la partie de blocage (6) suivant une même direction.

3. Dispositif selon l'une quelconque des revendications précédentes dans lequel la bascule est en appui contre l'organe mobile (22) et la partie de blocage (6) respectivement de part et d'autre du pivot.

4. Dispositif selon l'une quelconque des revendications précédentes dans lequel l'organe mobile (22) est monté coulissant.

5. Dispositif selon l'une quelconque des revendications précédentes dans lequel la partie de blocage (6) présente une cavité (54) adjacente à une zone d'appui de la bascule sur la partie de blocage et s'étendant en regard de la bascule. (34).

6. Dispositif selon l'une quelconque des revendications précédentes dans lequel la partie de blocage (6) présente une cavité (54) adjacente à une zone d'appui de la bascule (34) sur la partie de blocage et s'étendant d'un côté de la zone d'appui opposé à la bascule (34).

7. Dispositif selon l'une quelconque des revendications précédentes dans lequel la partie de blocage (6) présente une cavité (54) entourant une zone d'appui de la bascule (34) sur la partie de blocage et s'étendant en regard de la bascule (34).

8. Dispositif selon l'une quelconque des revendications précédentes dans lequel la bascule comprend un bras (40) en appui contre l'organe mobile (22) et un bras en appui contre la partie de blocage, moins long que l'autre bras (42).

9. Dispositif selon l'une quelconque des revendications précédentes dans lequel l'organe mobile (22) présente une extrémité à face sphérique (25) en contact avec la bascule (34).

10. Véhicule **caractérisé en ce qu'**il comprend un dispositif (2) selon l'une quelconque des revendications précédentes.

## Patentansprüche

1. Diebstahlschutzvorrichtung (2) für eine Fahrzeuglenksäule, umfassend:
- einen Sperrabschnitt (6), der einen Lenksäulen-Sperrriegel (8) umfasst, und
- ein bewegliches Element (22), das dazu geeignet ist, eine Lagesperrung des Riegels (8) zu steuern; und
- einen Zugriffsabschnitt (4), der ein Schloss umfasst, und
- ein Gehäuse (16), das den Sperrabschnitt (6) und den Zugriffsabschnitt (4) umfasst und eine Sollbruchstelle (18) aufweist, die dazu geeignet ist, unter der Einwirkung einer geringen Kraft zu zerbrechen, und an einem Übergang zwischen dem Zugriffs- (4) und dem Sperrabschnitt (6) angeordnet ist;
- wobei das bewegliche Element (22) dazu geeignet ist, die Lagesperrung des Riegels (8) bei einer Trennung des Zugriffs- und Sperrabschnitts im Bereich der Sollbruchstelle (18) zu steuern, wobei der Zugriffsabschnitt (4) eine schwenkbare Wippe (34) in Anlage einerseits an dem beweglichen Element (22) und andererseits an dem Sperrabschnitt (6) umfasst.

2. Vorrichtung nach dem vorhergehenden Anspruch, wobei die Wippe einer selben Richtung folgend an dem beweglichen Element (22) und dem Sperrabschnitt (6) anliegt.

3. Vorrichtung nach einem der vorhergehenden Ansprüche, wobei die Wippe auf beiden Seiten des Schwenkpunkts jeweils an dem beweglichen Element (22) und dem Sperrabschnitt (6) anliegt.

4. Vorrichtung nach einem der vorhergehenden Ansprüche, wobei das Element (22) verschiebbar montiert ist.

5. Vorrichtung nach einem der vorhergehenden Ansprüche, wobei der Sperrabschnitt (6) einen Hohlraum (54) aufweist, der zu einer Anlagestelle der Wippe an dem Sperrabschnitt benachbart ist und sich der Wippe (34) zugewandt erstreckt.

6. Vorrichtung nach einem der vorhergehenden Ansprüche, wobei der Sperrabschnitt (6) einen Hohlraum (54) aufweist, der zu einer Anlagestelle der Wippe (34) an dem Sperrabschnitt benachbart ist und sich auf einer Seite der Anlagestelle entgegengesetzt zur Wippe (34) erstreckt.

7. Vorrichtung nach einem der vorhergehenden Ansprüche, wobei der Sperrabschnitt (6) einen Hohlraum (54) aufweist, der eine Anlagestelle der (34) an dem Sperrabschnitt umgibt und sich der Wippe (34) zugewandt erstreckt.

8. Vorrichtung nach einem der vorhergehenden Ansprüche, wobei die Wippe einen Arm (40) in Anlage an dem beweglichen Element (22) und einen Arm in Anlage an dem Sperrabschnitt umfasst, der weniger lang ist als der andere Arm (42).

9. Vorrichtung nach einem der vorhergehenden Ansprüche, wobei das bewegliche Element (22) ein Ende mit kugelförmiger Fläche (25) in Kontakt mit der Wippe (34) aufweist.

10. Fahrzeug, **dadurch gekennzeichnet, dass** es eine Vorrichtung (2) nach einem der vorhergehenden Ansprüche umfasst.

## Claims

1. An anti-theft device (2) for a vehicle steering column, including:
- a blocking portion (6) comprising a steering column blocking bolt (8), and
- a movable member (22) capable of controlling a blocking in the position of the bolt (8); and
- an access portion (4) comprising a lock and
- a casing (16) comprising the blocking portion (6) and the access portion (4) and having a fusible area (18) capable of breaking under the effect of a reduced force and disposed at a junction between the access (4) and the blocking (6) portions;
- said movable member (22) being capable of controlling the blocking in the position of the bolt (8) upon a separation of the access and blocking portions at the fusible area (18), the access portion (4) including a pivoting rocker (34) bearing, on the one hand, against the movable member (22) and, on the other hand, against the locking portion (6).

2. The device according to the preceding claim, wherein the rocker bears against the movable member (22) and the blocking portion (6) along a same direction.

3. The device according to any one of the preceding claims, wherein the rocker bears against the movable member (22) and the blocking portion (6) respectively on either side of the pivot.

4. The device according to any one of the preceding claims, wherein the movable member (22) is slidably mounted.

5. The device according to any one of the preceding claims, wherein the blocking portion (6) has a cavity (54) adjacent to a bearing area of the rocker on the blocking portion and extending opposite the rocker (34).

6. The device according to any one of the preceding claims, wherein the blocking portion (6) has a cavity (54) adjacent to a bearing area of the rocker (34) on the blocking portion and extending from one side of the bearing area opposite the rocker (34).

7. The device according to any one of the preceding claims, wherein the blocking portion (6) has a cavity (54) surrounding a bearing area of the rocker (34) on the blocking portion and extending opposite the rocker (34).

8. The device according to any one of the preceding claims, wherein the rocker comprises an arm (40) bearing against the movable member (22) and an arm bearing against the blocking portion, which is shorter than the other arm (42).

9. The device according to any one of the preceding claims, wherein the movable member (22) has an end (25) with a spherical face in contact with the rocker (34).

10. A vehicle **characterized in that** it comprises a device (2) according to any one of the preceding claims.
